# EUROPÄISCHE PATENTSCHRIFT

(11) **EP 2 886 843 B1**
(45) Veröffentlichungstag und Bekanntmachung des Hinweises auf die Patenterteilung: **19.07.2017**
(21) Anmeldenummer: 14194737.4
(22) Anmeldetag: 25.11.2014
(51) Int. Cl.: F02K 1/76, F02K 1/72, F02K 1/09

(54) **Fluggasturbine mit einer Triebwerksverkleidung mit Schubumkehrvorrichtung**
Aviation gas turbine having an engine cowl with thrust reverser
Turbine à gaz d'aéronef dotée d'un capot ayant un inverseur de poussée

(30) Priorität: 19.12.2013 DE 102013226770
(43) Veröffentlichungstag der Anmeldung: 24.06.2015
(73) Patentinhaber: Rolls-Royce Deutschland Ltd & Co KG, 15827 Blankenfelde-Mahlow (DE); Liebherr-Aerospace Lindenberg GmbH, 88161 Lindenberg (DE)
(72) Erfinder: Todorovic, Predrag, 10437 Berlin (DE); Schumann, Uwe, 88069 Tettnang (DE); Müller, Frank, 88161 Lindenberg/Allgäu (DE); Metzler-Störmer, Dirk, 88179 Oberreute (DE)
(74) Vertreter: Hoefer & Partner Patentanwälte mbB

(56) Entgegenhaltungen:
- US-A- 4 407 120
- US-A- 4 527 391
- US-A- 5 209 057
- US-A1- 2010 001 123

## Beschreibung

Die Erfindung bezieht sich auf eine Fluggasturbine mit einer Triebwerksverkleidung mit Schubumkehrvorrichtung gemäß dem Oberbegriff des Anspruches 1.

Im Einzelnen bezieht sich die Erfindung auf eine Fluggasturbine mit einer Triebwerksverkleidung, deren in Strömungsrichtung hinterer Bereich mit einer Schubumkehrvorrichtung versehen ist, wobei der hintere Bereich zur Betätigung der Schubumkehrvorrichtung in Axialrichtung, bezogen auf die Maschinenachse der Fluggasturbine, verschiebbar ausgebildet ist.

Aus dem Stand der Technik sind vielfältige Ausgestaltungen von Schubumkehrvorrichtungen bekannt. So zeigt beispielsweise die US 2010/0139242 A1 einen verschiebbaren hinteren Bereich einer Triebwerksverkleidung, welcher über mehrere hydraulische Betätigungselemente verschoben wird. Hierbei sind Kolben-Zylinder-Einheiten sowie Getriebe vorgesehen, um die mehreren Betätigungseinrichtungen gleichmäßig zu verfahren. Dabei ist insbesondere eine Synchronisierung um den Umfang der Triebwerksverkleidung erforderlich, um die gleichmäßige Verschiebung des hinteren Bereichs der Triebwerksverkleidung oder deren Einzelkomponenten zu überwachen und zu synchronisieren. Dies ist insbesondere deshalb erforderlich, weil einzelne Betätigungsvorrichtungen ausfallen können oder durch Fehlfunktionen nicht zuverlässig arbeiten können. Die mehreren Betätigungsvorrichtungen sind jeweils mit Gleitvorrichtungen gekoppelt, in welchen die einzelnen Bauteile oder Komponenten verschoben werden. Dies führt zu einer erheblichen Reibung und bedingt stets die Gefahr, dass sich die gesamte Anordnung verkantet und klemmt, da die Aktuatoren nicht in gleicher Linie wie der Schiebemechanismus liegen. Dies ist insbesondere bei großen Temperaturunterschieden und ungünstigen Betriebsbedingungen sowie bei den auftretenden Schwingungen ein erhebliches Problem. Um eine gleichmäßige Verschiebung der einzelnen Komponenten sicherzustellen, weisen die aus dem Stand der Technik bekannten Konstruktionen nicht nur vielfache Betätigungsvorrichtungen, sondern auch unterschiedlichste Gleitschienensysteme auf, welche insbesondere an der Oberseite und der Unterseite der Triebwerksverkleidung und/oder um deren Umfang verteilt angeordnet sind. Insgesamt ergibt sich ein hoher apparatetechnischer Aufwand, der insbesondere hinsichtlich der Überwachung der verschiedenen Bauteile und Komponenten einen hohen Aufwand erfordert und sowohl in der Herstellung, als auch in der Wartung kostenintensiv und aufwendig ist.

Die US 2010/001123 A1 beschreibt eine Schubumkehrvorrichtung einer Fluggasturbine, bei welcher ein hinterer Bereich der Triebwerksverkleidung auf Schienen verschiebbar ist. Die Konstruktion ist so ausgebildet, dass der hintere Bereich der Triebwerksverkleidung soweit verschoben werden kann, dass sich ein freier Zugang zu dem Innenbereich, insbesondere zu den Schubumkehr-Kaskaden ergibt. Unabhängig von den Schienen, auf welchen der hintere Bereich der Triebwerksverkleidung geführt ist, erfolgt ein Antrieb über Zahnstangen und Zahnräder, wobei der Antrieb einen gemeinsamen Motor umfasst.

Eine weitere Schubumkehrvorrichtung ist aus der US 5 209 057 A bekannt. Dabei werden Blockagetüren verschwenkt. Diese Verschwenkung erfolgt über eine bogenförmige Zahnstange und ein zugeordnetes Ritzel.

Die US 4 527 391 A beschreibt eine Schubumkehrvorrichtung. Bei dieser sind die zu bewegenden Teile mittels nicht dargestellter Lagerungen gelagert. Um die außenliegenden und innenliegenden Baugruppen in ihrer Bewegung zu synchronisieren, sind parallele Zahnstangen mit zugeordneten Zahnrädern vorgesehen.

Eine weitere Schubumkehrvorrichtung zeigt die US 4 407 120 A. Dabei erfolgt die Lagerung und Verschiebung des hinteren Bereich des Triebwerkverkleidung in konventioneller Weise. Zur Verschwenkung von Schubumkehrtüren oder Blockagetüren wird ein Zahnstangen-Ritzel-Antrieb verwendet.

Der Erfindung liegt die Aufgabe zugrunde, eine Fluggasturbine mit einer Triebwerksverkleidung mit einer Schubumkehrvorrichtung zu schaffen, welche bei einfachem Aufbau und einfacher, kostengünstiger Herstellbarkeit die Nachteile des Standes der Technik vermeidet und ein hohes Maß an Betriebssicherheit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der hintere Bereich der Triebwerksverkleidung an zwei zueinander parallelen Schienen verschiebbar gelagert ist. Es liegt somit eine (Teleskop)schienenanordnung vor, wobei die an dem hinteren Bereich der Triebwerksverkleidung angeordneten Schienenelemente jeweils mit einer Zahnstange versehen sind. Die erfindungsgemäße Lösung sieht somit zwei voneinander beabstandete

Zahnstangen vor, die an den zwei zueinander parallelen Schienen gleiten und somit eine axiale Verschiebung des hinteren Bereichs der Triebwerksverkleidung ermöglichen. Mit den Zahnstangen befindet sich jeweils ein Zahnrad oder Ritzel in Eingriff, um die Zahnstange relativ zu der Schiene zu bewegen. Das Zahnrad ist jeweils über ein Getriebe mit einem gemeinsamen Motor gekoppelt (rack & pinion Prinzip).

Durch die erfindungsgemäße Ausgestaltung ist somit lediglich ein einziges Antriebselement, nämlich der gemeinsame Motor erforderlich, um den gesamten hinteren Bereich der Triebwerksverkleidung zu verschieben. Da der Motor mit beiden Getrieben in Eingriff ist und da diese beiden Getriebe jeweils über das Zahnrad mit der jeweiligen Zahnstange in Eingriff sind, erfolgt eine synchrone und gleichmäßige Bewegung der beiden Zahnstangen in den Schienen. Die Antriebkraft ist daher in gleicher Linie wie die Reibungskraft der Schienenanordnung. Somit kann keine Verklemmung auftreten, vielmehr erfolgt ein zuverlässiges und gleichmäßiges Verschieben des hinteren Bereichs der Triebwerksverkleidung.

Erfindungsgemäß kann auf Synchronisierungsmaßnahmen, wie diese aus dem Stand der Technik bekannt sind, verzichtet werden, da stets eine gleichmäßige Verschiebung der gesamten hinteren Triebwerksverkleidung durch den einen gemeinsamen Motor sichergestellt ist.

Zusätzlich zu der erheblichen Steigerung der Betriebssicherheit ergibt sich eine einfachere Ausgestaltung, da insgesamt weniger Bauteile benötigt werden. Dies senkt sowohl das Gesamtgewicht als auch die Kosten der Triebwerksverkleidung.

Die Zahnstange ist erfindungsgemäß in einer Gleitbahn in der Schiene längsverschiebbar gelagert. Die Lagerung erfolgt bevorzugterweise als Gleitlagerung. Es ist jedoch auch möglich, eine Rollenlagerung oder Ähnliches vorzusehen.

Erfindungsgemäß ist der hintere Bereich der Triebwerksverkleidung im Wesentlichen ringartig ausgebildet. Dabei sitzt der Motor bevorzugterweise am oberen Bereich der Triebwerksverkleidung. Dies ist insbesondere auch hinsichtlich der auf die Triebwerksverkleidung wirkenden Kräfte vorteilhaft, da der Motor im Bereich der Aufhängung des Triebwerks an einem Pylon angeordnet werden kann.

Besonders günstig ist es, wenn die beiden Schienen im Wesentlichen um die Breite des das Triebwerk lagernden Pylons beabstandet sind. Die Triebwerksverkleidung kann somit, abgesehen von dem Bereich des Pylons, im Wesentlichen ringartig ausgebildet sein. Hierdurch ist eine steife Konstruktion möglich, die auf zusätzliche Verstrebungen oder Ähnliches verzichten kann. Auch hierdurch ergibt sich eine erhebliche Reduzierung des Gesamtgewichts.

Das erfindungsgemäß verwendete Getriebe ist bevorzugterweise als Winkelgetriebe ausgebildet, um eine betriebsgünstige Dimensionierung des Motors zu ermöglichen. Somit ist eine Optimierung hinsichtlich der auftretenden Drehmomente möglich. Im Winkel angeordnete Zähne des Zahnstangenmechanismus bringen mehrere Zähne gleichzeiting in Kontakt, damit ergeben sich eine optimierte Vibrationsebene und geringe Geräusche.

Erfindungsgemäß ist der Motor als Hydraulikmotor oder als Elektromotor ausgebildet. Er kann dabei in einfacher Weise so dimensioniert werden, so dass zusätzlich zu der reinen Verschiebung des hinteren Bereichs der Triebwerksverkleidung auch weitere Elemente einer Schubumkehrvorrichtung, beispielsweise Kaskaden oder Türen oder Ähnliches, betätigt werden können.

Nachfolgend wird die Erfindung anhand eines Ausführungsbeispiels in Verbindung mit der Zeichnung beschrieben. Dabei zeigt:
- Fig. 1: eine schematische Darstellung einer erfindungsgemäßen Fluggasturbine an einem Flügel eines Flugzeugs,
- Fig. 2 und 3: perspektivische schematisierte Draufsichten auf die erfindungsgemäße Ausgestaltung im geschlossenen und geöffneten Zustand des hinteren Bereichs der Triebwerksverkleidung, und
- Fig. 4: eine vereinfachte Draufsicht auf den Motor und die zugeordneten Getriebe.

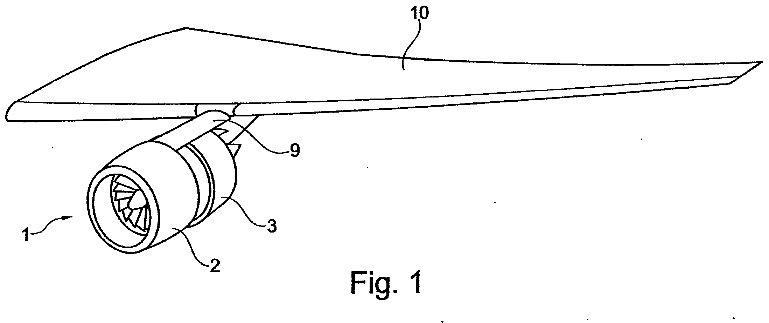

Die Fig. 1 zeigt eine vereinfachte schematische Darstellung einer Fluggasturbine 1. Diese umfasst eine Triebwerksverkleidung 2, deren hinterer Bereich 3 in Axialrichtung, bezogen auf die Maschinenachse, verschiebbar ist. Die Fluggasturbine 1 ist mittels eines Pylons 9 an einem Flügel 10 eines Flugzeugs befestigt, so wie dies aus dem Stand der Technik bekannt ist.

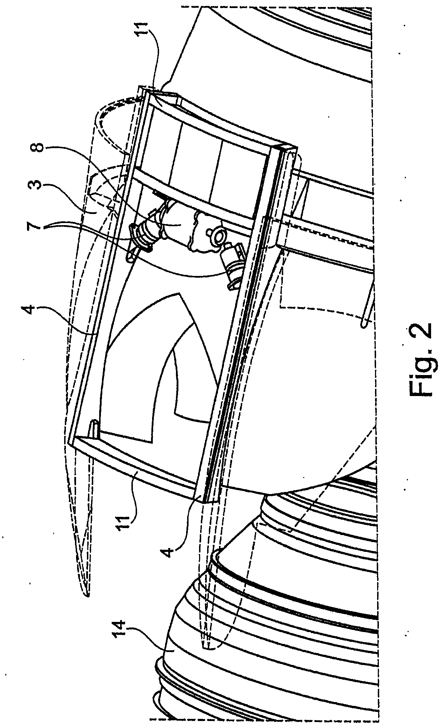

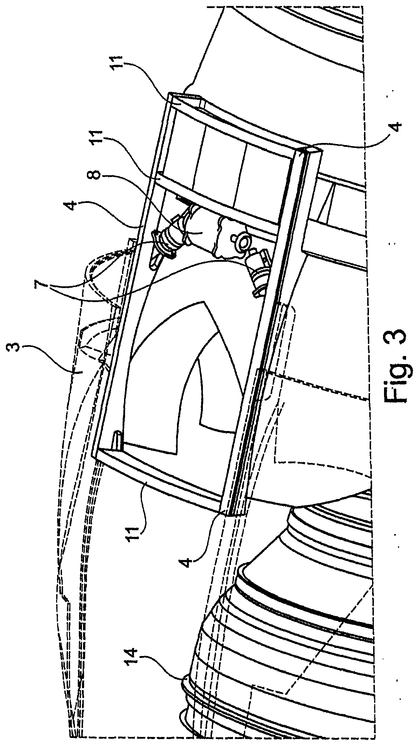

Die Figuren 2 und 3 zeigen in vereinfachter Darstellung ein Ausführungsbeispiel der Erfindung, welches zwei zueinander beabstandete, parallele Schienen 4 umfasst, die über Querstreben 11 zueinander gelagert und beabstandet sind. Aus Gründen der Vereinfachung der Darstellung wurde darauf verzichtet, die Lagerung der Schienen 4 an der Fluggasturbine 1 selbst zu zeigen.

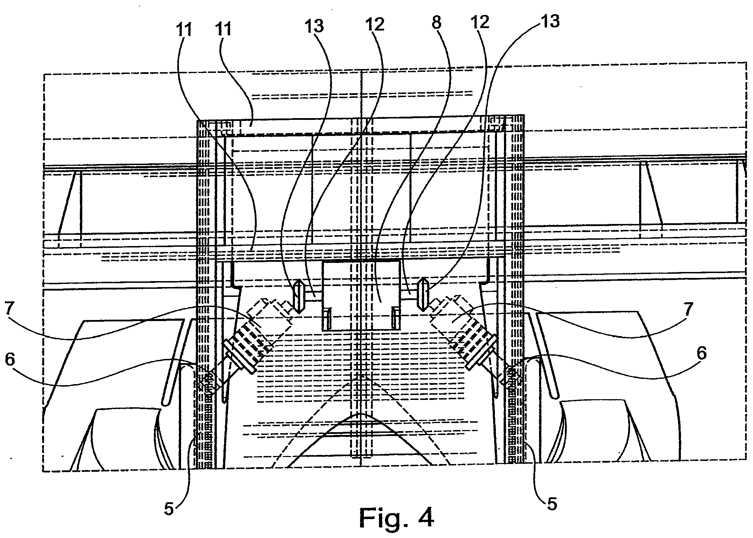

Die Fig. 4 zeigt eine vereinfachte Draufsicht der in den Fig. 2 und 3 gezeigten Anordnung. Dabei ist ein zentrischer, gemeinsamer Motor 8 dargestellt, dessen seitliche Abtriebswellen über Kegelräder 13 mit zwei Getrieben 7 in Eingriff sind. Die Getriebe 7 wiederum sind jeweils mit einem Zahnrad 6 verbunden, welches jeweils mit einer Zahnstange 5 in Eingriff ist.

Die beiden Zahnstangen 5 sind gleitend in den Schienen 4 geführt und mit dem hinteren Bereich 3 der Triebwerksverkleidung 2 verbunden.

Die Fig. 2 und 3 zeigen einen geschlossenen Zustand des hinteren Bereichs 3 der Triebwerksverkleidung 2 (Fig. 2) sowie einen geöffneten Zustand (Fig. 3). Die Triebwerksverkleidung 2, welche zur Vereinfachung nur teilweise dargestellt ist, ist in Form eines bis auf die Ausnehmung zur Lagerung an den Schienen 4 geschlossenen Rings ausgebildet.

### Bezugszeichenliste:

- 1: Fluggasturbine
- 2: Triebwerksverkleidung
- 3: hinterer Bereich
- 4: Schiene
- 5: Zahnstange
- 6: Zahnrad
- 7: Getriebe
- 8: Motor
- 9: Pylon
- 10: Flügel
- 11: Querstrebe
- 12: Antriebswelle
- 13: Kegelrad
- 14: Kerntriebwerk

## Patentansprüche

1. Fluggasturbine mit einer Triebwerksverkleidung (2), deren in Strömungsrichtung hinterer Bereich (3) mit einer Schubumkehrvorrichtung versehen ist, wobei der hintere Bereich (3) in Axialrichtung verschiebbar ausgebildet ist, wobei der hintere Bereich (3) an zwei zueinander parallelen Schienen (4) verschiebbar gelagert ist und jeweils eine an jeder Schiene (4) gelagerte Zahnstange (5) umfasst, welche jeweils mit einem Zahnrad (6) in Eingriff ist, welches jeweils über ein Getriebe (7) mit einem gemeinsamen Motor (8) gekoppelt ist, **dadurch gekennzeichnet, dass** die Zahnstange (5) längsverschiebbar in einer Gleitbahn der Schiene (4) gelagert ist.

2. Fluggasturbine nach Anspruch 1, **dadurch gekennzeichnet, dass** der Motor (8) am oberen Bereich der Triebwerksverkleidung (2) angeordnet ist.

3. Fluggasturbine nach einem der Ansprüche 1 oder 2, **dadurch gekennzeichnet, dass** der hintere Bereich (3) der Triebwerksverkleidung (2) im Wesentlichen ringartig ausgebildet ist.

4. Fluggasturbine nach einem der Ansprüche 1 bis 3, **dadurch gekennzeichnet, dass** die Schienen (4) im Wesentlichen um die Breite eines das Triebwerk lagernden Pylons (9) beabstandet sind.

5. Fluggasturbine nach einem der Ansprüche 1 bis 4, **dadurch gekennzeichnet, dass** das Getriebe (7) als Winkelgetriebe ausgebildet ist.

6. Fluggasturbine nach einem der Ansprüche 1 bis 5, **dadurch gekennzeichnet, dass** der Motor (8) als Hydraulikmotor oder als Elektromotor ausgebildet ist.

7. Fluggasturbine nach einem der Ansprüche 1 bis 6, **dadurch gekennzeichnet, dass** die Betätigungskraft der Zahnstange (5) und des Zahnrads (6) in gleicher Wirkrichtung wie die Schiene (4) ausgerichtet ist.

## Claims

1. Aircraft gas turbine with an engine cowling (2), the rear area (3) of which, when viewed in the flow direction, is provided with a thrust-reversing device, with the rear area (3) being designed to be displaceable in the axial direction, with the rear area (3) being mounted in a displaceable manner on two rails (4) arranged in parallel to each other (4), and comprising respectively one gear rack (5) mounted on each rail (4), with each of the gear racks (5) being in mesh with a cogwheel (6), which is coupled to a common motor (8) via a gear unit (7), **characterized in that** the gear rack (5) is mounted in a longitudinally displaceable manner inside a slipway of the rail (4).

2. Aircraft gas turbine in accordance with Claim 1, **characterized in that** the motor (8) is arranged at the upper area of the engine cowling (2).

3. Aircraft gas turbine in accordance with one of the Claims 1 or 2, **characterized in that** the rear area (3) of the engine cowling (2) is formed in a substantially ring-like shape.

4. Aircraft gas turbine in accordance with one of the Claims 1 to 3, **characterized in that** the rails (4) are spaced apart substantially by the width of a pylon (9) which supports the engine.

5. Aircraft gas turbine in accordance with one of the Claims 1 to 4, **characterized in that** the gear unit (7) is designed as an angular gear.

6. Aircraft gas turbine in accordance with one of the Claims 1 to 5, **characterized in that** the motor (8) is designed as a hydraulic motor or as an electric motor.

7. Aircraft gas turbine in accordance with one of the Claims 1 to 6, **characterized in that** the actuating force of the gear rack (5) and the cogwheel (6) is oriented in the same effective direction as the rail (4).

## Revendications

1. Turbine à gaz aéronautique avec un carénage de moteur (2) dont la zone arrière (3) dans le sens d'écoulement est pourvue d'un inverseur de poussée, sachant que la zone arrière (3) est conçue de manière à pouvoir être déplacée dans le sens axial, sachant que la zone arrière (3) est montée de façon à pouvoir être déplacée sur deux rails parallèles l'un à l'autre (4) et comprend respectivement une crémaillère (5) montée sur chaque rail (4), lesquelles crémaillères sont chacune en prise avec une roue dentée (6) qui est accouplée à un moteur commun (8) moyennant un engrenage (7), **caractérisée en ce que** la crémaillère (5) est montée de façon à permettre son déplacement longitudinal dans une glissière du rail (4).

2. Turbine à gaz aéronautique selon la revendication n° 1, **caractérisée en ce que** le moteur (8) est disposé sur la zone supérieure du carénage de moteur (2).

3. Turbine à gaz aéronautique selon une des revendications n° 1 ou n° 2, **caractérisée en ce que** la zone arrière (3) du carénage de moteur (2) est essentiellement de forme annulaire.

4. Turbine à gaz aéronautique selon une des revendications n° 1 à n° 3, **caractérisée en ce que** les rails (4) sont espacés essentiellement de la largeur d'un pylône (9) supportant le moteur.

5. Turbine à gaz aéronautique selon une des revendications n° 1 à n° 4, **caractérisée en ce que** l'engrenage (7) est conçu sous la forme d'un engrenage angulaire.

6. Turbine à gaz aéronautique selon une des revendications n° 1 à n° 5, **caractérisée en ce que** le moteur (8) est conçu sous la forme d'un moteur hydraulique ou d'un moteur électrique.

7. Turbine à gaz aéronautique selon une des revendications n° 1 à n° 6, **caractérisée en ce que** la force d'actionnement de la crémaillère (5) et de la roue dentée (6) est orientée dans la même direction effective que le rail (4).
